(19) **Europäisches Patentamt European Patent Office Office européen des brevets**

(11) **EP 4 651 116 A1**

(12) **EUROPEAN PATENT APPLICATION**
published in accordance with Art. 153(4) EPC

(43) Date of publication:
**19.11.2025 Bulletin 2025/47**

(21) Application number: **23916147.4**

(22) Date of filing: **16.11.2023**

(51) International Patent Classification (IPC):
**G08G 1/16** (2006.01)

(52) Cooperative Patent Classification (CPC):
**G08G 1/16**

(86) International application number:
**PCT/JP2023/041339**

(87) International publication number:
**WO 2024/150530 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.01.2023 JP 2023002730**

(71) Applicant: **TOYOTA JIDOSHA KABUSHIKI KAISHA**
**Toyota-shi**
**Aichi 471-8571 (JP)**

(72) Inventors:
• **OYA, Kai**
  **Toyota-shi, Aichi 471-8571 (JP)**
• **INOUE, Shintaro**
  **Toyota-shi, Aichi 471-8571 (JP)**
• **TANAKA, Shin**
  **Toyota-shi, Aichi 471-8571 (JP)**

(74) Representative: **J A Kemp LLP**
**80 Turnmill Street**
**London EC1M 5QU (GB)**

(54) **ASSISTANCE DEVICE, ASSISTANCE METHOD, AND DRIVER ASSISTANCE PROGRAM**

(57) The present disclosure provides a support apparatus that provides support to a driver of a vehicle when a risk object including a risk of collision with the vehicle is present. The support apparatus of the present disclosure comprises a first notification device configured as a device for notifying the driver of information, a second notification device configured as a device for notifying the driver of information and different from the first notification device, and one or more processors. The one or more processors are configured to execute a recognition process for recognizing the risk object present around the vehicle, and a notification process for notifying the driver of information about a recognized risk object that is recognized by the recognition process. The notification process includes, when there is a plurality of recognized risk objects, notifying information about a part or all of the plurality of recognized risk objects separately to the first notification device and the second notification device.

Fig. 10

EP 4 651 116 A1

**Description**

[Technical field]

The present disclosure relates to a technique for providing support to a driver of a vehicle when there is a target object that contains a risk of collision with the vehicle.

[Background Art]

Patent Document 1 discloses a driving support device which provides a driver (operator) with information about a monitored target that is an area around a vehicle that should be monitored. The driving support device receives captured images obtained by capturing images of the surroundings of the vehicle, and generates one display image including captured images of a plurality of monitored targets. The display image is displayed on a display device to notify the driver of information regarding the monitored targets. At this time, for the monitored target having high priority, the captured image is displayed with information emphasized, for example, by surrounding it with a colored frame.

In addition to the above Patent Document 1, the following Patent Document 2 can be mentioned as an example of a document that shows the technical level at the time of filing in the technical field of the present disclosure.

[Prior Art Documents]

[Patent Documents]

[Patent Document 1] JP 2020-13369 A
[Patent Document 2] U.S. Patent No. 9,272,708

[Summary of the Invention]

[Problem to Be Solved by the Invention]

In order to support a driver of a vehicle, it is considered to notify the driver of information about a risk object that contains a risk of collision with the vehicle. In particular, it is considered, when there is a plurality of risk objects, how to notify the driver of information about the plurality of risk objects. As one method, it is considered to use a single display device to notify information about a plurality of risk objects, as in the prior art described above. However, if all information about a plurality of risk objects around the vehicle is notified by a single device, the driver may be overwhelmed with excessive information and may not be able to make a decision in time about how to deal with the risk objects.

The present disclosure has been made in consideration of the above-mentioned problem. The present disclosure aims to provide a technique that can appropriately notify a driver of information regarding a plurality of risk objects existing around the vehicle, while preventing the driver from being provided with too much or too little information.

[Means for solving the problem]

The present disclosure provides a support apparatus. The support apparatus of the present disclosure is an apparatus that provides support to a driver of a vehicle when a risk object including a risk of collision with the vehicle is present. The support apparatus of the present disclosure comprises a first notification device configured as a device for notifying the driver of information, a second notification device configured as a device for notifying the driver of information, and one or more processors. The one or more processors are configured to execute a recognition process for recognizing the risk object present around the vehicle, and a notification process for notifying the driver of information about a recognized risk object that is recognized by the recognition process.

The second notification device is configured as a device different from the first notification device. The notification process includes, when there is a plurality of recognized risk objects, notifying information about a part or all of the plurality of recognized risk objects separately to the first notification device and the second notification device.

In the support apparatus of the present disclosure, the first notification device and the second notification device may be a display device that notifies information by displaying information on a screen and a light-emitting device that notifies information by emitting light, respectively.

In the support apparatus of the present disclosure, the notification process may include, when there are three or more recognized risk objects, notifying information about a part or all of the recognized risk objects separately to the first notification device, the second notification device, and a third notification device. The third notification device is configured as a device for notifying the driver of information and configured as a device different from the first notification device and the second notification device.

In the support apparatus of the present disclosure, the first notification device may be placed at a location where an angle of a direction in which the driver looks at the first notification device and a traveling direction of the vehicle is smaller than an angle of a direction in which the driver looks at the second notification device and the traveling direction of the vehicle.

The present disclosure provides a support method. More specifically, the present disclosure provides the support method for providing support to a driver of a vehicle when a risk object including a risk of collision with the vehicle is present. The support method of the present disclosure comprises the following two steps. The first step is recognizing the risk object present around the vehicle. The second step is notifying information, when there is the plurality of recognized risk objects, about a part or all of the plurality of recognized risk objects separately to a first notification device and a second notification device. The first notification device and the second notification device are devices for notifying the driver of information. The second notification device is a device different from the first notification device.

The present disclosure provides a driver support program. The driver support program of the present disclosure is a program that causes a computer to execute a process for providing support to a driver of a vehicle when a risk object including a risk of collision with the vehicle is present. The driver support program of the present disclosure is configured to cause the computer to execute the following processes. The first process is a process for recognizing the risk object present around the vehicle. The second process is a process for notifying information, when there is the plurality of recognized risk objects, about a part or all of the plurality of recognized risk objects separately to a first notification device and a second notification device. The first notification device and the second notification device are devices for notifying the driver of information. The second notification device is a device different from the first notification device.

[Effect of the Invention]

According to the technique of the present disclosure, when a plurality of risk objects is recognized around a vehicle, information about a part or all of the plurality of risk objects is notified separately to at least two devices. Since all information about the plurality of recognized risk objects is not notified by a single device, the driver can be prevented from becoming overwhelmed with excessive information. In this way, according to the technique of the present disclosure, appropriate notifications can be provided to the driver even when there is a plurality of risk objects around the vehicle.

[Brief description of the drawings]

[Fig. 1] It is a block diagram showing an example of a configuration of a support apparatus according to a present embodiment.
[Fig. 2] It is a block diagram showing an example of a functional configuration of the support apparatus according to the present embodiment.
[Fig. 3] It is a conceptual diagram showing an example of an actual risk object.
[Fig. 4] It is a conceptual diagram showing an example of a semi-actual risk object.
[Fig. 5] It is a conceptual diagram showing an example of a potential risk object.
[Fig. 6] It is a block diagram showing another example of the functional configuration of the support apparatus.
[Fig. 7] It is a diagram for explaining an example of an index for calculating a movement probability.
[Fig. 8] It is a diagram for explaining another example of the index for calculating the movement probability.
[Fig. 9] It is a schematic diagram showing an example of a scene in which notification is performed by the support apparatus according to the present embodiment.
[Fig. 10] It is a flowchart showing an example of processing executed by the support apparatus according to the present embodiment.
[Fig. 11] It is a schematic diagram showing an example of a scene in which notification is performed by the support apparatus according to the present embodiment.
[Fig. 12] It is a schematic diagram showing an example of a scene in which notification is performed by the support apparatus according to the present embodiment.
[Fig. 13] It is a schematic diagram showing an example of a scene in which notification is performed by the support apparatus according to the present embodiment.
[Fig. 14] It is a schematic diagram showing an example of a scene in which notification is performed by the support apparatus according to the present embodiment.
[Fig. 15] It is a schematic diagram showing an example of a scene in which notification is performed by the support apparatus according to the present embodiment.

[Description of Embodiments]

Embodiments of the present disclosure will be described with reference to the accompanying drawings.

1. Description of Support Apparatus

A support apparatus according to this embodiment provides support to a driver of a vehicle when a risk object is present around the vehicle. The risk object referred to here is a target object which has a risk of collision with the vehicle. The support provided by the support apparatus includes notifying the driver of the vehicle of information about the risk object present around the vehicle and is provided in order to reduce the risk of collision between the vehicle and the risk object.

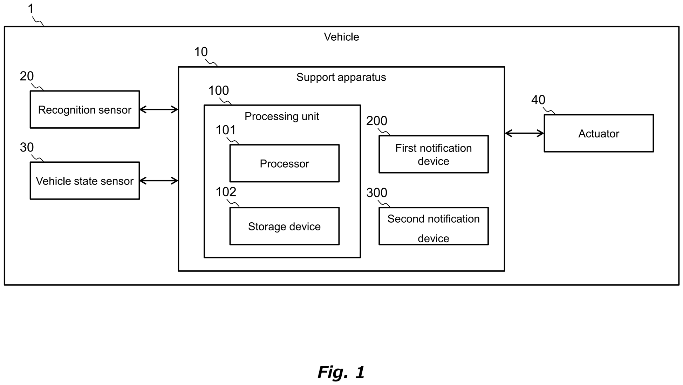

Fig. 1 is a block diagram showing an example of a configuration of a vehicle 1, which is a target of support by a support apparatus 10 according to the embodiment. The vehicle 1 includes the support apparatus 10, a recognition sensor 20, a vehicle state sensor 30, and an actuator 40. The recognition sensor 20, the vehicle state sensor 30, and the actuator 40 are mounted on the vehicle 1. The support apparatus 10 may be mounted on the vehicle 1 or may be distributed to the vehicle 1 and an external device. In other words, a part of the support apparatus 10 may be included in an external device outside the vehicle 1, and support for the vehicle 1 may be remotely provided.

The support apparatus 10 is configured to be able to communicate information with the recognition sensor 20, the vehicle state sensor 30, and the actuator 40. For example, the support apparatus 10 is connected to these devices via an in-vehicle network.

The recognition sensor 20 recognizes (detects) a situation around the vehicle 1. Examples of the recognition sensor 20 include a camera, a millimeter wave radar, and a LIDAR (Laser Imaging Detection and Ranging). The support apparatus 10 can acquire information detected by the recognition sensor 20 by communicating with the recognition sensor 20. The information acquired by the support apparatus 10 is temporarily stored in a storage device 102.

The vehicle state sensor 30 detects a state of the vehicle 1. The vehicle state sensor 30 includes a speed sensor, an acceleration sensor, a yaw rate sensor, a steering angle sensor, and the like. The support apparatus 10 can acquire information detected by the vehicle state sensor 30 by communicating with the vehicle state sensor 30. The information acquired by the support apparatus 10 is temporarily stored in the storage device 102.

The actuator 40 includes a steering actuator, which steers wheels of the vehicle 1, a driving actuator, which drives the vehicle 1, and a braking actuator, which brakes the vehicle 1. In addition to notifying the driver of information, the support apparatus 10 may provide support to the driver by operating the actuator 40.

The support apparatus 10 includes one or more processors 101 (hereinafter simply referred to as the processor 101) and one or more storage devices 102 (hereinafter simply referred to as the storage device 102) as a processing unit 100, a first notification device 200, and a second notification device 300. The processing unit 100 of the support apparatus 10 may be an ECU (Electronic Control Unit) mounted on the vehicle.

The processor 101 executes various processes. The storage device 102 stores various programs and various kinds of data. The processor 101 executes a program stored in the storage device 102 to realize various processes by the support apparatus 10, including processes for providing support to the driver.

The first notification device 200 and the second notification device 300 are HMIs for notifying the driver of information. The first notification device 200 and the second notification device 300 are configured as devices having different hardware, and each can independently perform notification to the driver. The first notification device 200 and the second notification device 300 may be any devices capable of notifying the driver of information, and a form of the device and a notification method are not limited.

Examples of the notification method include display on a screen, light emission, sound, vibration, and the like. For example, either or both of the first notification device 200 and the second notification device 300 may be a display device which displays information for the driver on a screen, may be a head-up display, or may be a light-emitting device which notifies information to the driver by illuminating a part of the device. These devices can provide information to the driver visually. Alternatively, either the first notification device 200 or the second notification device 300 may be a speaker which notifies the driver of information by sound and voice.

Furthermore, the first notification device 200 and the second notification device 300 may be devices which notify information using the same notification method, or may be devices that notify information using different notification methods. Even when the same notification method is used to notify information, shapes and sizes of the notification devices may be different. As an example of devices using different notification methods, the first notification device 200 may be the device which visually notifies information to the driver, and the second notification device 300 may be the speaker. Alternatively, the first notification device 200 and the second notification device 300 may be the display device and the light-emitting device, respectively. As an example of devices which use the same notification method, the first notification device 200 and the second notification device 300 may be display devices having different screen sizes or shapes. Alternatively, the first notification device 200 and the second notification device 300 may be light-emitting devices having different sizes, shapes, light-emitting patterns, or the like.

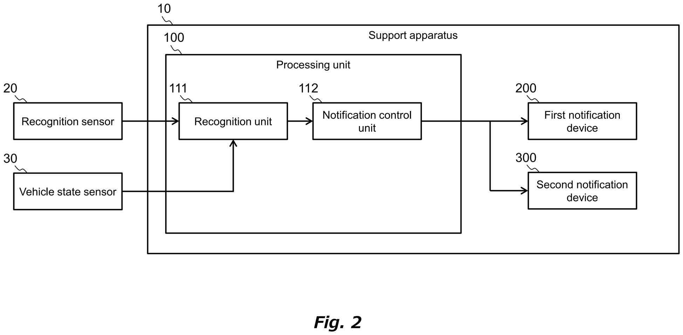

The support apparatus 10 can notify the driver of the vehicle 1 of information using either or both of the first notification device 200 and the second notification device 300. An example of a functional configuration of the support apparatus 10 for notifying the driver of information will be described with reference to Fig. 2. Recipients of information notified by the support apparatus 10 may include an occupant of the vehicle 1.

As shown in Fig. 2, the processing unit 100 of the support apparatus 10 includes a recognition unit 111 and a notification control unit 112 as functional units. These functional units are realized by the processor 101 executing the program stored in the storage device 102.

The recognition unit 111 performs a recognition process to recognize the risk object present around the vehicle 1. The recognition unit 111 can recognize the risk object by acquiring information from the recognition sensor 20 and the vehicle state sensor 30. Hereinafter, in this specification, the risk object recognized by the recognition unit 111 through the recognition process is referred to as a recognized risk object.

Information on the recognized risk object is sent from the recognition unit 111 to the notification control unit 112. The notification control unit 112 performs a notification process to notify the driver of information related to the recognized risk object by controlling the first notification device 200 and the second notification device 300.

When there is only one recognized risk object, an arbitrary notification mode may be used. On the other hand, when there is a plurality of recognized risk objects, the notification control unit 112 causes information about a part or all of the recognized risk objects to be notified separately to the first notification device 200 and the second notification device 300. In other words, information about a part of the multiple recognized risk objects is notified by the first notification device 200, and information about at least a part of the remaining recognized risk objects is notified by the second notification device 300.

The effect of notifying information separately to two devices in this way, when there is a plurality of recognized risk objects, will be described below. As a comparative example, a case where there is a plurality of recognized risk objects and information is notified to the driver using only one device is considered.

First, a case where information about a plurality of recognized risk objects is notified to the driver by a single device is considered. In this case, the driver may be overwhelmed with excessive information. In other words, too much information is presented by one device, and thus it may become difficult for the driver to select information which he/she wants to use, and it may cause delay of his/her response to risk.

Then, as another case, a case where the driver is notified of information about only one of a plurality of recognized risk objects is considered. In this case, it is possible to prevent the driver from being overwhelmed with excessive information. However, it becomes difficult for the driver to determine from the notification whether he/she is being notified of only one recognized risk object because there is only one recognized risk object or there are actually multiple recognized risk objects. As a result, it may be difficult for the driver to notice risks which are not targets of notification, and responses to these may be delayed.

On the other hand, in this embodiment, when there is a plurality of recognized risk objects, information about the recognized risk objects is notified separately to the first notification device 200 and the second notification device 300. Since information regarding all recognized risk objects is not presented by a single device, the driver can be prevented from being overwhelmed with excessive information. Furthermore, at least a part of the information not notified by one of the devices is notified to the driver by the other device. Therefore, it is possible to make the driver aware that there is a risk object other than the risk object which becomes a target of notification by one of the devices. In this way, the support apparatus according to the embodiment can appropriately notify the driver of information related to the recognized risk object.

2. Example of Embodiment - Risk Object Type

An example of an embodiment for the support apparatus 10 to perform the above-described notification will be described below. First, how the recognition unit 111 recognizes the target object as the risk object will be described together with a type of the risk object.

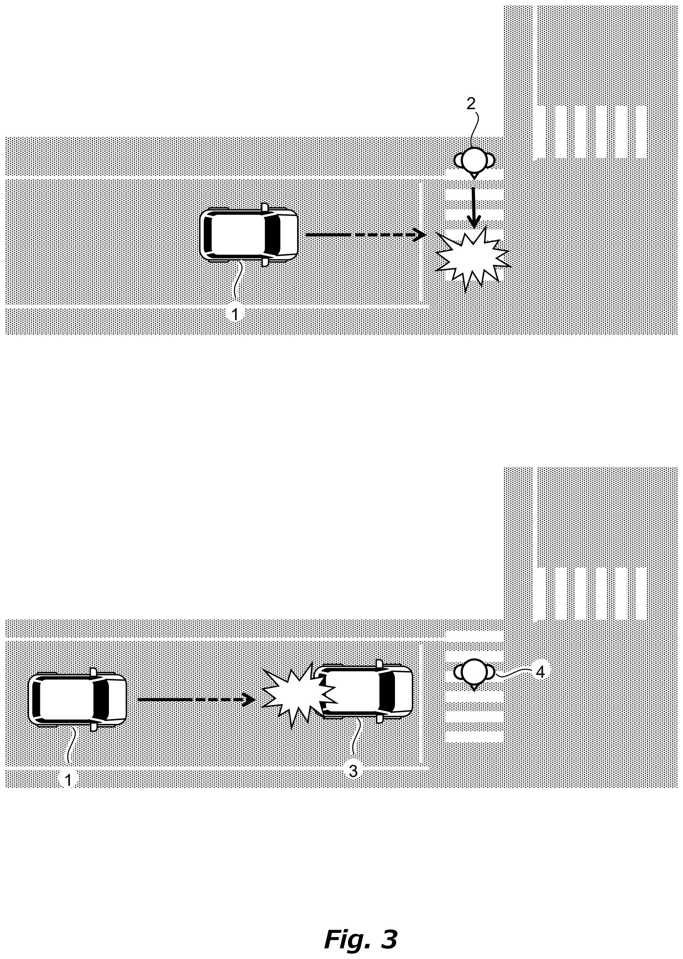

A risk object type, which indicates the type of the risk object, includes an actual risk object, a semi-actual risk object, and a potential risk object. These three risk object types will be explained with reference to Fig. 3 to Fig. 5.

A target object that may be an actual risk object or a semi-actual risk object is an object which is actually detected as being present around the vehicle 1. The support apparatus 10 can detect a target object that may be an actual risk object or a semi-actual risk object using the recognition sensor 20. For example, the support apparatus 10 can detect a target object present in front of the vehicle 1 by acquiring an image from a front camera included in the recognition sensor 20.

First, the actual risk object is described. The actual risk object is a target object which is detected to be present around the vehicle 1 and is judged to have a collision as a result of the situation, that is, a target object which is estimated to have a collision if the vehicle 1 continues traveling in the same direction and at the same speed as it is currently traveling. As an example, an upper diagram of Fig. 3 shows a scene in which a pedestrian 2 is recognized as the actual risk object, and the lower diagram of Fig. 3 shows a scene in which another vehicle 3 and a pedestrian 4 are recognized as the actual risk objects.

The pedestrian 2 is a pedestrian crossing a pedestrian crossing without a traffic light. It is estimated that if the vehicle 1 continues traveling in the current direction and at the current speed, it will collide with the pedestrian 2. Therefore, pedestrian 2 is recognized as the actual risk object.

Two or more actual risk objects may be recognized at the same time. The vehicle 3 in the lower diagram of Fig. 3 is a vehicle that is stopped in front of the vehicle 1. If vehicle 1 continues traveling in the current direction and at the current speed, it is estimated that the vehicle 1 will collide with the vehicle 3. Therefore, the vehicle 3 is recognized as the actual risk object. Furthermore, if the vehicle 1 passes by the vehicle 3 and continues traveling, there is a possibility that the vehicle 1 may collide with a pedestrian 4 present further ahead of the vehicle 3. Therefore, the pedestrian 4 is also recognized as the actual risk object.

Time to collision may be used to determine whether a collision will occur as a result of the situation or not. For example, the support apparatus 10 may recognize, as the actual risk object, a target object detected around the vehicle 1 for which the time to collision is equal to or less than a threshold value. The time to collision is time from when the target object which is an actual risk object is detected to when a collision is estimated to occur.

The time to collision is calculated using information about the type of the target object detected around the vehicle 1, and positions, speed, acceleration, directions, and the like of the vehicle 1 and the target object. The support apparatus 10 can acquire these kinds of information from the recognition sensor 20 and the vehicle state sensor 30.

For example, in the scene shown in the lower diagram of Fig. 3, the support apparatus 10 can acquire information about a distance between the vehicle 3 and the vehicle 1 using the camera or the LiDAR of the recognition sensor 20. In addition, the support apparatus 10 can acquire a vehicle speed of the vehicle 1 from a vehicle speed sensor of the vehicle state sensor 30. Then, based on these kinds of information, the support apparatus 10 can calculate the time until the vehicle 1 reaches the position of the vehicle 3 if it continues traveling in the current direction and at the current vehicle speed, that is, the time to collision. Similarly, when the detected target object is the pedestrian 2 or the pedestrian 4, the support apparatus 10 can calculate the time to collision based on the information acquired from the recognition sensor 20 and the vehicle state sensor 30. When the time to collision calculated in this manner is equal to or less than the threshold value, the support apparatus 10 recognizes the detected target object as the actual risk object.

Typical examples of the target object that may be the risk object are moving bodies such as a person, another vehicle, a motorcycle, a bicycle, and the like. However, the target objects that may be the actual risk objects include not only the moving bodies, but also structures such as a fence and a utility pole, and the like.

Next, the semi-actual risk object is described. As described above, a target object that may be a semi-actual risk object is a target object that is detected as being present around the vehicle 1. Among these, a moving body that is not currently judged to be likely to collide with the vehicle 1 as a result of the situation, but that may cause a risk of collision with the vehicle 1 depending on changes in their movements in the future, is recognized as the semi-actual risk object. In other words, a semi-actual risk object is a moving body that is not a risk at present but may become a risk in the future.

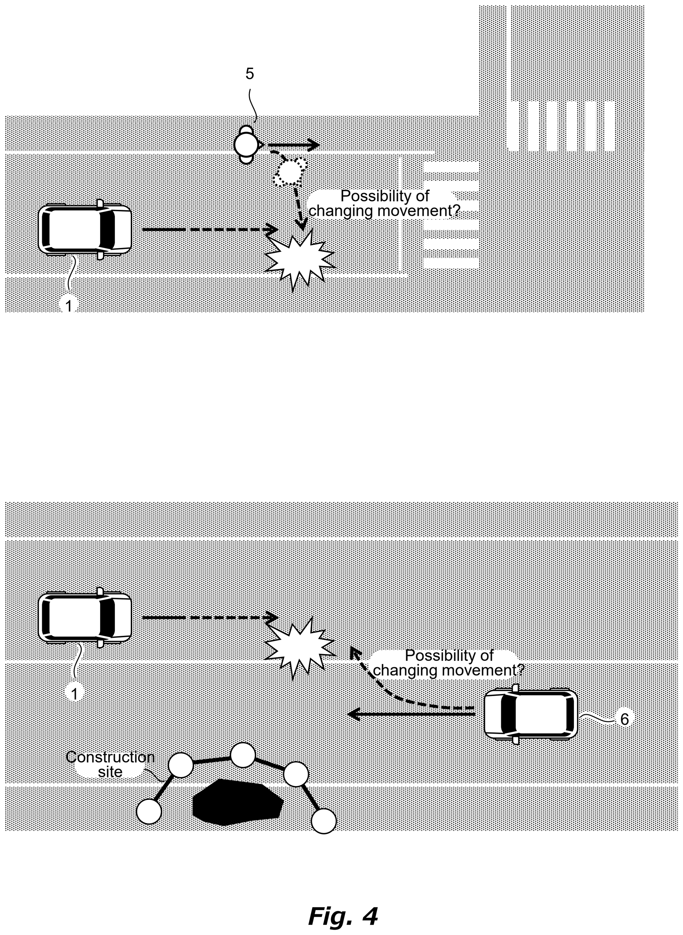

In the upper diagram of Fig. 4, a pedestrian 5 is shown as an example of a semi-actual risk object. The pedestrian 5 is walking on the side of the road, and the vehicle 1 is about to pass by the pedestrian 5. At this time, it is predicted that the pedestrian 5 will continue walking on the side of the road, and it is not estimated that the pedestrian 5 will collide with the vehicle 1. However, if the pedestrian 5 suddenly changes direction and runs out onto the roadway, a collision with the vehicle 1 may occur. In other words, although the pedestrian 5 is not currently a risk, there is a possibility that he or she may make unpredictable movements and become a risk. Therefore, the pedestrian 5 is recognized as the semi-actual risk object.

In the lower diagram of Fig. 4, another vehicle 6 is shown as an example of the semi-actual risk object. The vehicle 6 is traveling in an oncoming lane, and is not estimated to collide with the vehicle 1 at this time. However, the vehicle 6 may change its movement to avoid a construction site. If the vehicle 6 changes direction and move into the lane in which the vehicle 1 is traveling, it may cause the possibility of a collision with the vehicle 1. The vehicle 6 is not currently a target object that is judged to be a risk, but since it may become a risk in the future, it is recognized as the semi-actual risk object.

The support apparatus 10 acquires information about current and past positions, speeds, acceleration, types, directions, and the like of the vehicle 1 and the moving body detected around the vehicle 1 from the recognition sensor 20, the vehicle state sensor 30, and the storage device 102. Then, by comprehensively assessing these kinds of information, if it is determined that the detected moving body is not likely to have a collision as a result of the situation, but has a potential to pose a risk in the future, the moving object is recognized as the semi-actual risk object. Alternatively, the support apparatus 10 may calculate a movement probability, as described below, for a moving body which is detected around the vehicle 1 and is not recognized as the actual risk object, and recognize the moving body as the semi-actual risk object if the movement probability is greater than or equal to a predetermined value.

Lastly, the potential risk object is described. The potential risk object is a moving body that has not actually been detected but is estimated to possibly exist around the vehicle 1. In other words, the potential risk object is, so to speak, a fictitious moving body. The potential risk object may suddenly appear from a position in a blind spot as viewed from the vehicle 1, and if it appears, it may pose the possibility of a collision with the vehicle 1.

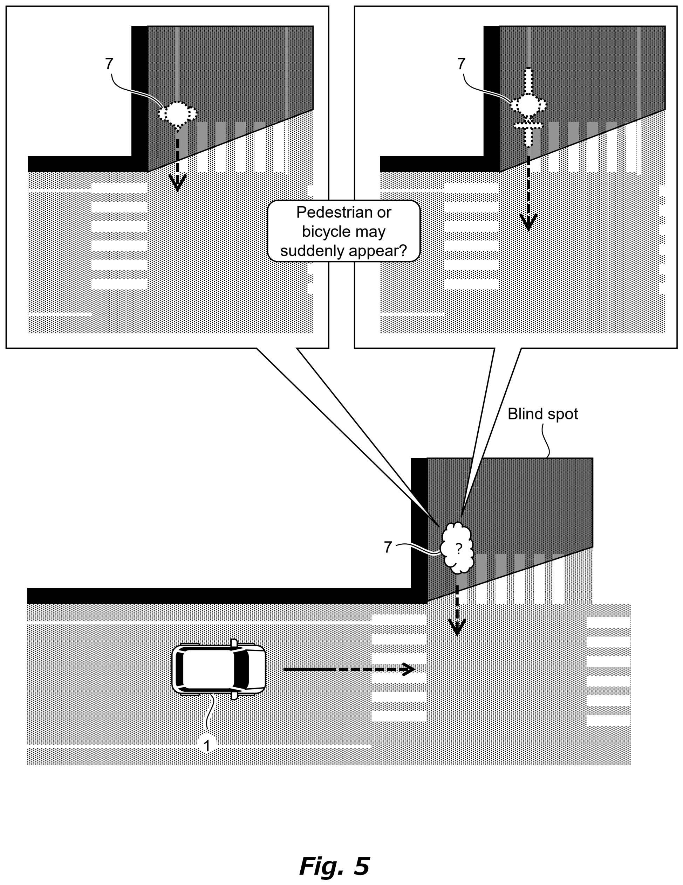

Fig. 5 shows a scene in which the vehicle 1 is about to pass through an intersection of low visibility. There is a blind spot as seen from the vehicle 1 in the intersection, and it is estimated that there is a possibility that a moving body 7 exists in the blind spot. The moving body 7 is a potential risk object recognized by the support apparatus 10. At present, the presence of the moving body 7 is not detected by the recognition sensor 20 or the like, and it is currently unknown whether it actually exists, and if it does, what type of moving body it is. However, if a moving body 7 actually exists and suddenly appears from the blind spot, the possibility of a collision with the vehicle 1 may occur.

The support apparatus 10 can detect an obstacle or a structure which creates a blind spot, for example, using the LiDAR or the camera of the recognition sensor 20. Then, if it is estimated that there is a possibility that a moving body exists in the blind spot as viewed from the vehicle 1, the support apparatus 10 recognizes the moving body as the potential risk object.

3. Example of Embodiment - Priority

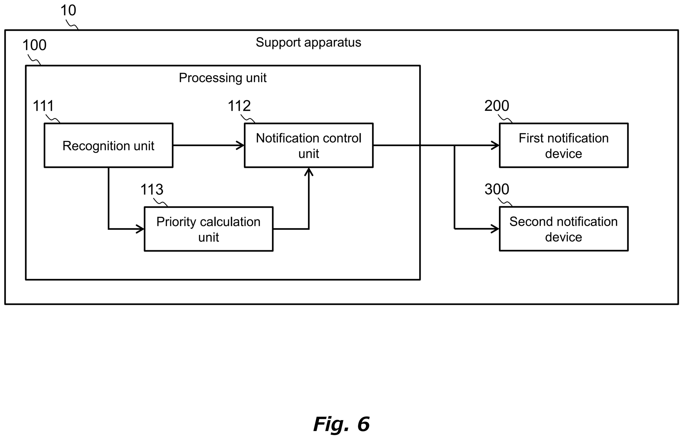

In an embodiment shown in Fig. 6, the processing unit 100 of the support apparatus 10 includes a priority calculation unit 113 in addition to the recognition unit 111 and the notification control unit 112. When there is a plurality of recognized risk objects, the priority calculation unit 113 executes a priority calculation process for calculating priority for each of the recognized risk objects.

The priority calculated by the priority calculation unit 113 is the priority of notification of information to the driver. The priority calculation unit 113 can calculate the priority based on the risk object type.

The first example of a method for calculating the priority is described. In the first example, the priority is determined to be a fixed value or a fixed range of values for each risk object type. It is considered that the driver should give priority to dealing with the recognized risk object which actually exists, rather than the recognized risk object which is uncertain in its existence. Furthermore, among the recognized risk objects which actually exist, it is considered that the driver should give priority to dealing with the recognized risk object which is estimated that it may collide with the vehicle 1 at present. Therefore, in the first example, the priority is determined in the order of highest to lowest: the actual risk object, the semi-actual risk object, and the potential risk object.

In the second example, the priority is calculated using an index corresponding to each risk object type. The driver is required to deal with the risk object more preferentially as the risk of collision with the vehicle 1 that it contains becomes higher. Therefore, the priority is calculated to be higher for such a risk object.

For calculating the priority of the actual risk object, the time to collision is used. Since it is considered that the risk of collision between the risk object and the vehicle 1 becomes higher as the time to collision is shorter, the priority is calculated to be higher as the time to collision is shorter. For example, the priority of the actual risk object may be calculated using the following formula.

[Equation 1]

$$(priority\ of\ actual\ risk\ object) = ka/(time\ to\ collision) \times ks \quad \cdots (1)$$

Here, ka and ks are predetermined coefficients. The coefficient ks is introduced to match dimensions and scales of the priority among the actual risk object, the semi-actual risk object, and the potential risk object. By matching the dimensions and the scales, it becomes possible to compare the priority between the recognized risk objects even if they belong to the different risk object types.

For calculating the priority of the semi-actual risk object, a movement probability is used. The movement probability is a probability that the moving body which is the semi-actual risk object changes its motion and moves toward the vehicle 1. The movement probability is calculated using information about the position, the speed, the acceleration, the direction, the type of the moving body, and the like of the semi-actual risk object.

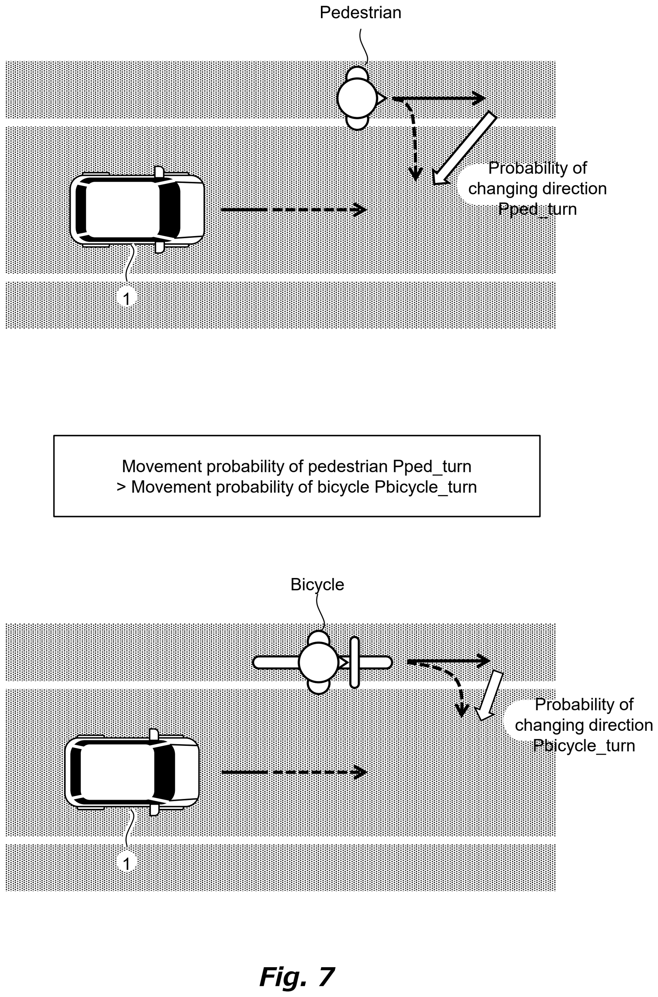

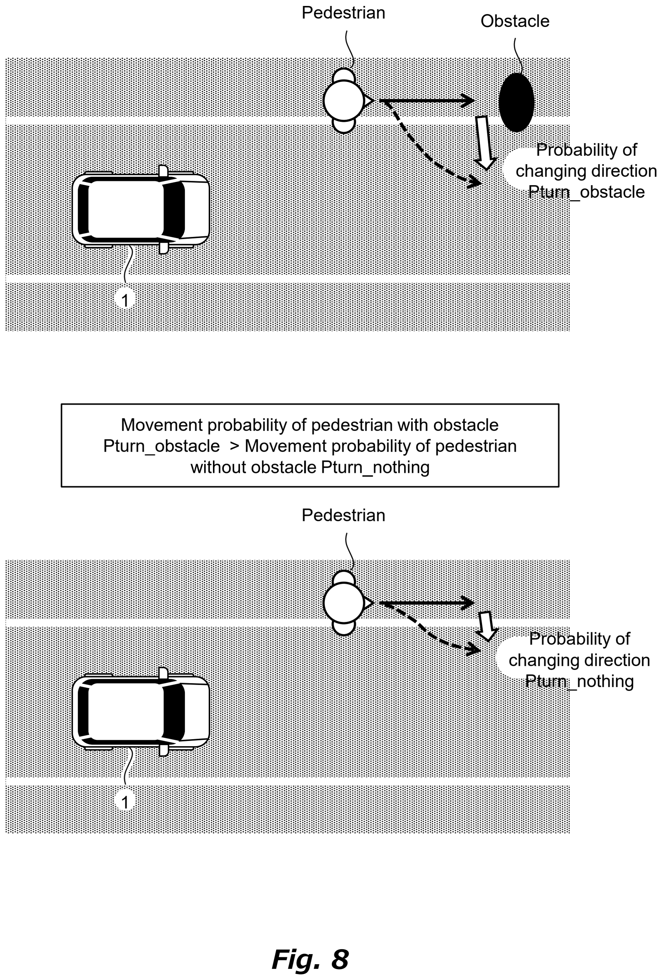

Examples of an index taken into consideration in calculating the movement probability are described with reference to Fig. 7 and Fig. 8. As shown in Fig. 7, the movement probability may be calculated taking a characteristic of each type of the moving body which is the semi-actual risk object into consideration. For example, since the pedestrian can change his/her direction more easily than the bicycle, a probability that he/she changes his/her traveling direction toward the vehicle 1 is considered to be higher. Therefore, the movement probability when the semi-actual risk object is the pedestrian is calculated to be higher than the movement probability when the semi-actual risk object is the bicycle, if other conditions are equal.

Similarly, since the bicycle can change its direction more easily than the motorcycle, the movement probability is calculated to be higher for the vehicle than for the motorcycle. Further, since the motorcycle can change its direction more easily than the vehicle, the movement probability is calculated to be higher for the motorcycle than for the vehicle. The support apparatus 10 can estimate the type of the moving body which is the semi-actual risk object based on, for example, a camera image acquired from the camera of the recognition sensor 20.

Furthermore, as shown in Fig. 8, the movement probability may be calculated taking into consideration whether the obstacle is present in the traveling direction of the moving body which is the semi-actual risk object. When there is an obstacle in the traveling direction of the semi-actual risk object (a pedestrian in the example of Fig. 8), it is considered that there is a high probability that the pedestrian changes the traveling direction compared to when there is no obstacle. Therefore, the movement probability when the obstacle is present is calculated to be higher than the movement probability when no obstacle is present if the other conditions are equal.

Since it is considered that the risk of collision with the vehicle 1 becomes higher as the movement probability of the recognized risk object is higher, the priority of the semi-actual risk object is calculated to be higher as the movement probability is higher. For example, the priority of the semi-actual risk object may be calculated by the following formula.
[Equation 2]

$$(priority\ of\ semi-actual\ risk\ object) = (movement\ probability) \times kb \times kj \quad \cdot\cdot\cdot (2)$$

kb and kj are predetermined coefficients. The coefficient kj is introduced to match dimensions and scales of the priority among the actual risk object, the semi-actual risk object, and the potential risk object.

The priority of the potential risk object is calculated, for example, by the following formula.
[Equation 3]

$$(priority\ of\ potentila\ risk\ object) = \left( R_{ped} \times S_{ped} + R_{bike} \times S_{bike} + R_{vehicle} \times S_{vehicle} \right) \times ks$$
$$\cdot\cdot\cdot (3)$$

The coefficient ks is a coefficient introduced to match dimensions and scales of the priority among the actual risk object, the semi-actual risk object, and the potential risk object. R is a potential risk value, which indicates a magnitude of risk of the potential risk object, and the priority is calculated to be higher as the potential risk value is higher. S is a coefficient for determining the priority from the potential risk value.

The subscripts R and S indicate the type of the moving body. In other words, $R_{ped}$, $R_{bike}$, and $R_{vehicle}$ represent the potential risk values when the potential risk objects are the pedestrian, the bicycle, and the vehicle, respectively. $S_{ped}$, $S_{bike}$, and $S_{vehicle}$ are coefficients which are determined according to the type of the moving body which may be the potential risk object.

The potential risk value represents the magnitude of the risk contained in the potential risk object, taking into account factors such as the possibility that the potential risk object actually appears from the blind spot, the possibility that the potential risk object cannot be avoided if it actually appears, and the extent of the damage that would occur if it cannot be avoided. When the potential risk object is the pedestrian, the bicycle, or the vehicle, the potential risk value may be calculated, for example, by the following formula, respectively.

[Equation 4]

$$R_{ped} = t1_{ped} \times F1 + t2_{ped} \times F2 + t3_{ped} \times F3 + t4_{ped} \times F4 + \cdot\cdot\cdot \quad \cdot\cdot\cdot (4)$$

$$R_{bike} = t1_{bike} \times F1 + t2_{bike} \times F2 + t3_{bike} \times F3 + t4_{bike} \times F4 + \cdot\cdot\cdot \quad \cdot\cdot\cdot (5)$$

$$R_{vehicle} = t1_{vehicle} \times F1 + t2_{vehicle} \times F2 + t3_{vehicle} \times F3 + t4_{vehicle} \times F4 + \cdot\cdot\cdot$$
$$\cdot\cdot\cdot (6)$$

F1, F2, F3, F4, etc are values that represent road environment factors of the road on which the vehicle 1 is traveling, such as a road width, a visibility angle, presence or absence of a pedestrian crossing, presence or absence of a sidewalk, and the like. t1, t2, t3, t4, etc are coefficients that are determined in advance in consideration of the influence that each road environmental factor has on the magnitude of risk. t1, t2, t3, t4, etc are coefficients determined for respective types of the moving bodies that is the potential risk object, and the subscripts indicate the types of the moving body.

4. Notification based on Priority

The priority calculated by the priority calculation unit 113 is transmitted to the notification control unit 112. The notification control unit 112 notifies information about a part or all of the plurality of recognized risk objects separately to the first notification device 200 and the second notification device 300 based on the priority. At this time, the notification control unit 112 determines a device which notifies the driver of the information about a part or all of the plurality of recognized risk objects so that information about the recognized risk object with higher priority is notified to the driver preferentially over information about the recognized risk object with lower priority. Specific examples are given to explain how the notification control unit 112 (support apparatus 10) notifies information separately based on the priority.

In one of the optimal configurations of the support apparatus 10, the first notification device 200 is the display device and the second notification device 300 is the light-emitting device.

The display device is an information display panel, which displays information necessary for driving, such as a vehicle speed, a remaining driving distance, time, temperature, and the like. When the risk object is recognized, the display content of the display device is switched to display information about the recognized risk object.

The light-emitting device is an ambient light which spreads in a width direction of a dashboard, and a spot that emits light, a color of the light, a light-emitting pattern, and the like can be controlled. The light emitting device is normally kept in a non-illuminating state so as not to disturb the driver while driving. Alternatively, light may be emitted in a color that relaxes the driver. When the risk object is recognized, a lighting mode is switched to emit light in a color or a pattern that alerts the driver.

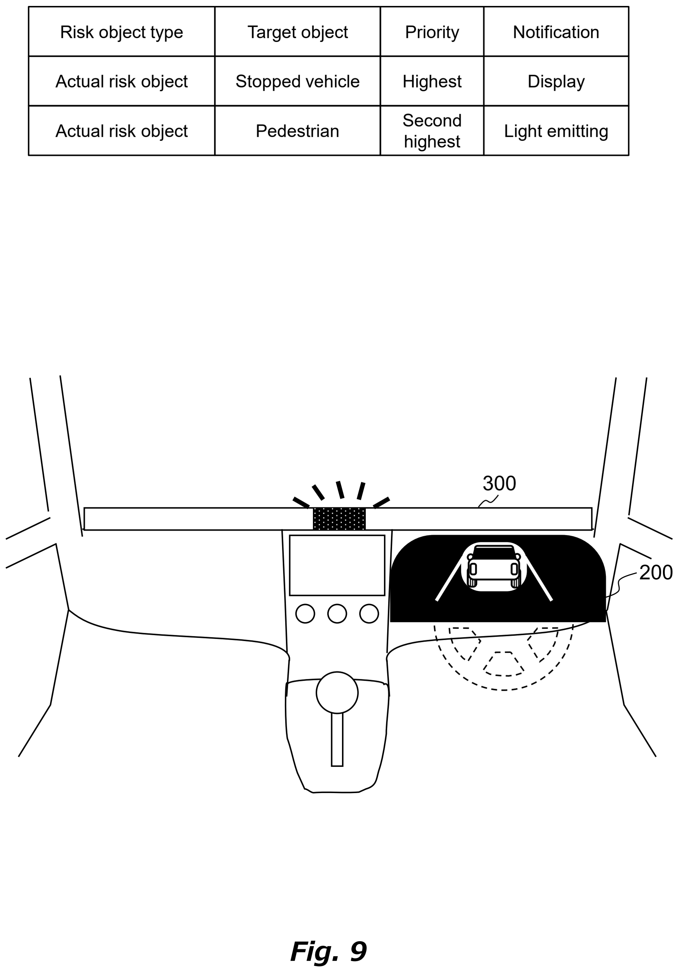

It is considered how notification is performed by the two devices, the display device and the light-emitting device, assuming a scene in which there are two recognized risk objects as shown in the lower diagram of Fig. 3. Fig. 9 is a conceptual diagram showing how notification is performed by the first notification device 200 as the display device and the second notification device 300 as the light-emitting device.

The vehicle 3 and the pedestrian 4 shown in the lower diagram of Fig. 3 are both recognized as the actual risk objects, so the priority is calculated based on the time to collision. Since the time to collision for the vehicle 3, which is closer to the vehicle 1, is shorter, the vehicle 3 has the highest priority, and the pedestrian 4 has the second highest priority. Based on the priority calculated in this manner, the support apparatus 10 notifies information about the two recognized risk objects separately to the display device 200 and the light-emitting device 300. Specifically, the support apparatus 10 notifies the driver of information about the vehicle 3 with the highest priority by the display device 200. The support apparatus 10 notifies the driver of information about the pedestrian 4 with the second highest priority by the light-emitting device 300.

In other words, the support apparatus 10 determines the devices that perform notification so that the display device 200 notifies information about the recognized risk object which has higher priority than that notified by the light-emitting device 300. In this case, since there are two recognized risk objects, information on all of the plurality of recognized risk objects is notified to the driver. When there are three or more recognized risk objects and information about a part of them is notified to the driver by the display device 200 and the light-emitting device 300, the recognized risk objects to be notified are selected to have higher priority than the recognized risk objects that are not to be notified.

The display device 200 is a device capable of transmitting a larger amount of information than the light emitting device 300. Therefore, by notifying information about the recognized risk object with the highest priority by the display device 200, the driver can obtain a lot of information about particularly important recognized risk object, making it easier for the driver to respond. Furthermore, information about the recognized risk object having a relatively low priority is notified from the light-emitting device 300. Since the light-emitting device 300 has a different way of notification from the display device 200, the driver is less likely to be overwhelmed with excessive information compared to a case in which information about all recognized risk objects is displayed on the display device 200. However, the light emission can at least inform the driver that there is a plurality of recognized risk objects, thereby calling the driver attention to the surroundings and improving driving safety.

Even if the first notification device 200 and the second notification device 300 are devices other than the display device 200 and the light-emitting device 300, effective notification can be given to the driver. For example, both the first notification device 200 and the second notification device 300 may be display devices. Furthermore, the display screen of the first notification device 200 may be larger than the display screen of the second notification device 300. In this case too, since the first notification device 200 can convey a larger amount of information to the driver than the second notification device 300, effective notification can be given to the driver when there is a plurality of recognized risk objects.

Furthermore, in the case where the first notification device 200 and the second notification device 300 are both devices that perform visual notification, the following arrangement of the devices is also preferable in order to effectively perform notification according to the priority. That is, each device is placed so that an angle of a direction in which the driver looks at the first notification device 200 and a traveling direction of the vehicle is smaller than an angle of a direction in which the driver looks at the second notification device 300 and the traveling direction of the vehicle. Thus, the first notification device 200 is more likely to be in a driver's field of view than the second notification device 300, making it easier for the driver to obtain information from the first notification device 200.

5. Processing Example

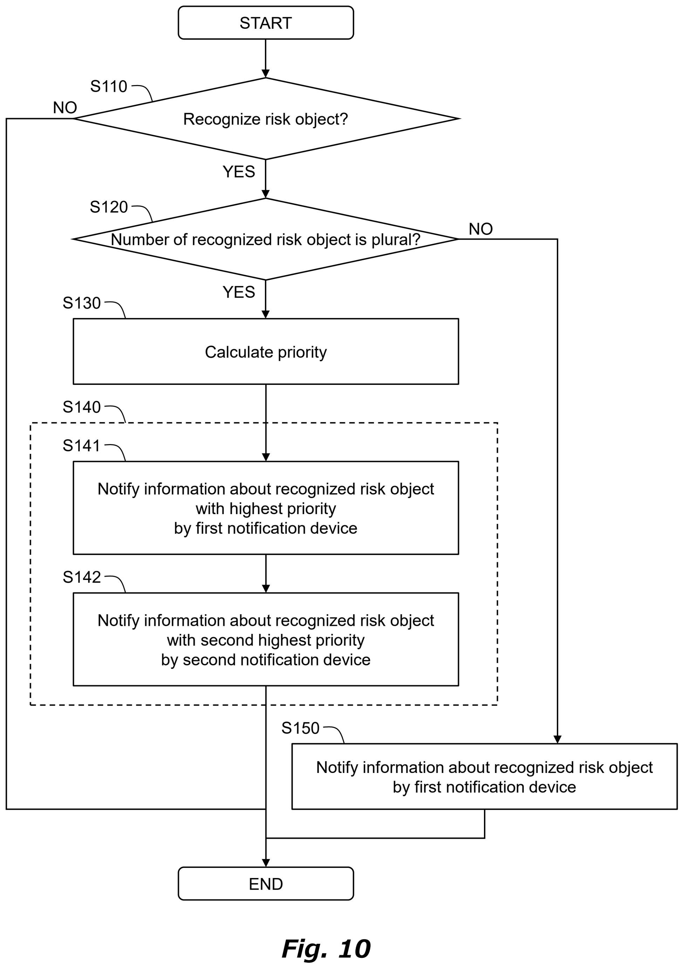

Processing executed by the support apparatus 10 to perform notification based on the priority is described. Fig. 10 is a flowchart showing an example of processing executed by the support apparatus 10, more specifically, processing executed by the processor 101. The flowchart shown in Fig. 10 is started, for example, when the vehicle 1 starts traveling, and is repeatedly executed at predetermined intervals while the vehicle is traveling.

In step S110, the support apparatus 10 determines whether the risk object is recognized around the vehicle 1 or not. The support apparatus 10 can recognize the risk object by detecting the target object and the blind spot around the vehicle 1 using, for example, a front camera or a side camera of the recognition sensor 20. If the risk object is not recognized, that is, if there is no recognized risk object, the processing at this time ends. On the other hand, if one or more risk objects are recognized, processing proceeds to step S120. The process in step S110 is executed in the recognition unit 111.

In step S120, the support apparatus 10 determines the number of the recognized risk objects. If there is only one recognized risk object, the processing proceeds to step S150.

In step S150, the support apparatus 10 notifies information about the recognized risk object using the first notification device 200 (display device 200). The display device 200 can convey a larger amount of information to the driver as compared to the light-emitting device 300. Therefore, when there is one recognized risk object, more accurate information can be conveyed to the driver by notifying the driver of the information by the display device 200. The process of step S150 is executed in the notification control unit 112. After the notification of information by the first notification device 200 is performed, the processing at this time ends.

On the other hand, if it is determined in step S120 that a plurality of recognized risk objects exist, the processing proceeds to step S130. In step S130, the support apparatus 10 calculates the priority. Calculation of the priority is performed in the priority calculation unit 113 based on the risk object type. Then, the processing proceeds to step S140.

In step S140, the support apparatus 10 notifies information about a part or all of the plurality of recognized risk objects separately to the first notification device 200 and the second notification device 300 based on the priority. The process of step S140 is performed by the notification control unit 112.

Steps S141 and S142 are a specific example of the process performed in step S140. Here, an example is shown in which each of the first notification device 200 and the second notification device 300 notifies information about one recognized risk object.

In step S141, the support apparatus 10 selects the recognized risk object with the highest priority from among the recognized risk objects whose priorities have been calculated in step S130. Then, the support apparatus 10 notifies information about the selected recognized risk object by the first notification device 200.

In step S142, the support apparatus 10 selects the recognized risk object with the second highest priority from among the recognized risk objects whose priorities have been calculated in step S130. Then, the support apparatus 10 notifies information about the selected recognized risk object by the second notification device 300. After the notification is performed, the processing at this time ends.

The numbers of recognized risk objects about which information is notified from the first notification device 200 and the second notification device 300 may be one, respectively, or one or both may be multiple. For example, step S141 may be a step in which information about the recognized risk objects having the first and second highest priority is notified by the first notification device 200. In this case, step S142 may be a step in which information about the recognized risk object having the third highest priority is notified by the second notification device 300, or a step in which information about the recognized risk objects having the third and fourth highest priority is notified from the second notification device 300.

However, in order to prevent the driver from being overwhelmed with excessive information, it is preferable that the number of risk objects notified from each device is not excessively large. Therefore, for example, upper limits may be set for the numbers of recognized risk objects about which information is notified from respective devices, depending on the characteristics of the devices.

In addition, when information about a part of the plurality of recognized risk objects is notified separately to the first notification device 200 and the second notification device 300, information about the recognized risk object which is not notified by either the first notification device 200 or the second notification device does not need to be notified to the driver. Alternatively, information about at least a part of the recognized risk objects which is not notified by either the first notification device 200 or the second notification device may be notified by a third notification device, which is different from either the first notification device 200 or the second notification device 300. Furthermore, a fourth notification device may be used to notify information which is not notified by any of the first, second, and third notification devices.

However, if the number of devices that notify the driver is excessively increased, the driver may easily become overwhelmed with excessive information. For this reason, it is desirable to limit the number of notification devices to a certain extent. In a particularly preferable embodiment, the notification is performed using two notification devices, the first notification device 200 and the second notification device 300.

6. Specific Examples of Notification

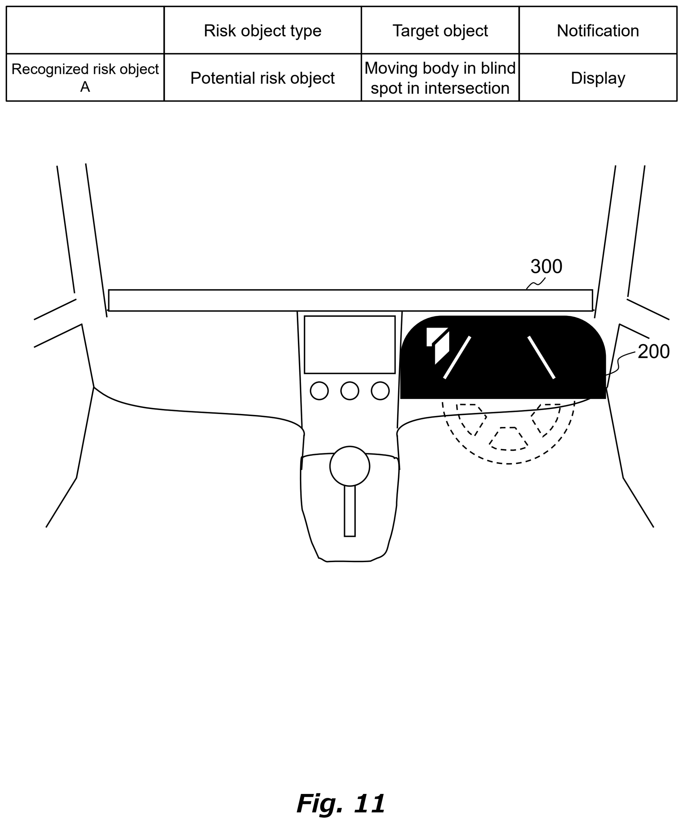

Based on the above description, some specific examples are described of how notification is performed when the first notification device 200 is the display device and the second notification device 300 is the light-emitting device. Figs.11 to 15 are schematic diagrams showing how notification is performed.

When there is only one recognized risk object, information about the recognized risk object is notified from the display device, which is the first notification device 200. In the example shown in Fig. 11, the presence of the moving body is estimated in the blind spot created by the intersection, and the support apparatus 10 recognizes the moving body as the potential risk object. Since there is one recognized risk object, the support apparatus 10 notifies information about the potential risk object by the display device 200. The notification from the display device 200 is performed, for example, by displaying an icon indicating the blind spot on the screen.

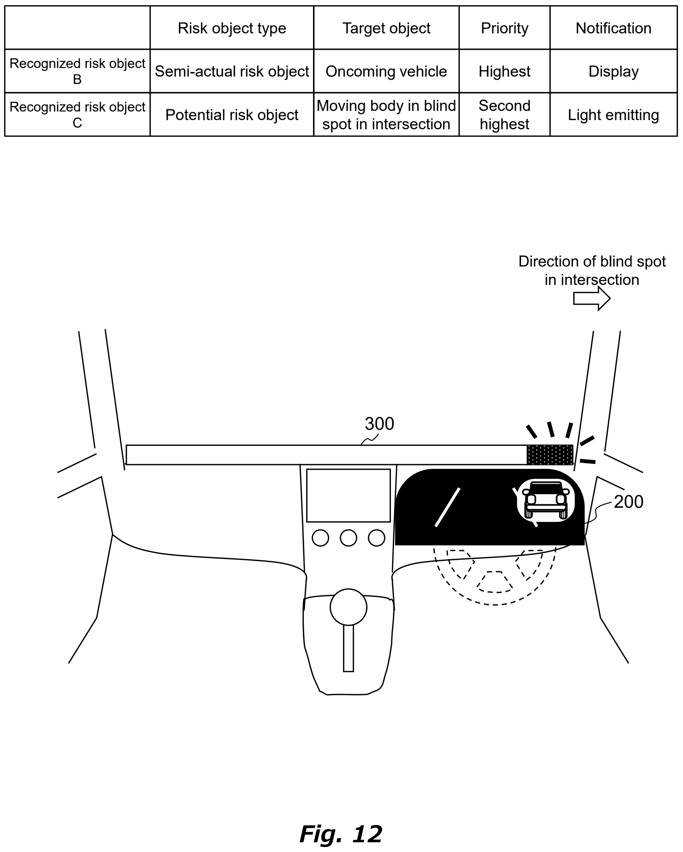

In the example of Fig. 12, two risk objects, a recognized risk object B and a recognized risk object C, are recognized by the support apparatus 10. The recognized risk object B is an oncoming vehicle which is recognized as the semi-actual risk object, and the recognized risk object C is a moving body as the potential risk object which is estimated to exist in a blind spot created by an intersection. Since there is a plurality of recognized risk objects, the support apparatus 10 notifies information about these two recognized risk objects separately to the display device 200 and the light-emitting device 300.

At this time, notification is performed so that the display device 200 notifies information about the recognized risk object having higher priority than the light-emitting device 300. Therefore, information about the recognized risk object B, which has the highest priority, is notified from the display device 200, and information about the recognized risk object C, which has the second highest priority, is notified from the light-emitting device 300.

Notification by the display device 200 is performed by displaying an image of the oncoming vehicle on the screen. Alternatively, instead of the image, an icon representing the oncoming vehicle may be displayed on the screen. At this time, the oncoming vehicle may be emphasized by surrounding the image with a frame or by making the icon glow. By emphasizing the display, it is possible to more strongly call the driver's attention.

Notification from the light-emitting device 300 is performed by lighting up a light emitting portion of the light-emitting device 300. At this time, the position at which light is emitted may be changed depending on the position of the recognized risk object. In the example of Fig. 12, since the recognized risk object C exists on the right side of the vehicle 1, the right side of the light-emitting device 300 is illuminated. Furthermore, when notification is made by the light-emitting device 300, the light-emitting portion may be caused to emit light in a color or a pattern corresponding to the information to be notified. For example, the color or pattern of the emitted light may be changed depending on the distance to the recognized risk object, the risk object type of the recognized risk object, the type of the moving body that is the recognized risk object, the priority of the recognized risk object, or the like.

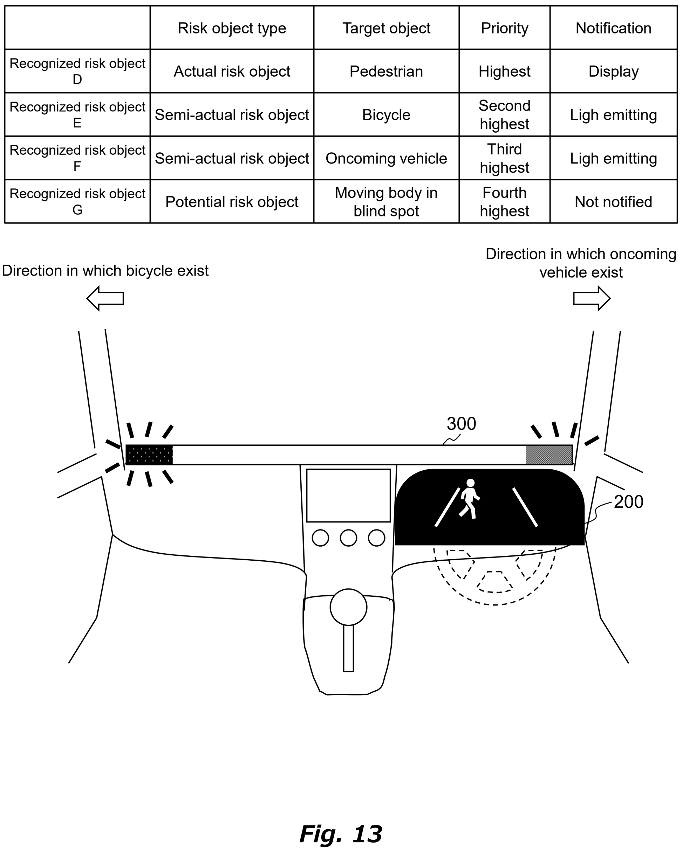

In the example of Fig. 13, the support apparatus 10 recognizes four risk objects. Then, the support apparatus 10 notifies information relating to three of the recognized risk objects separately to the display device 200 and the light-emitting device 300. Specifically, information regarding the recognized risk object D, which has the highest priority, is displayed on the display device 200, and information regarding the recognized risk object E and the recognized risk object F, which have the second and third highest priority, is notified by illuminating the light-emitting device 300.

The color or the pattern of the light emitted by the light-emitting device 300 may be different between the recognized risk object E and the recognized risk object F. For example, information about the recognized risk object E, which has higher priority, may be notified by strong light, and information about the recognized risk object F, which has lower priority, may be notified by weak light. Alternatively, the recognized risk object E may be displayed in a color such as red or orange that the driver can easily notice even in the peripheral vision, and the recognized risk object F may be displayed in a color such as green or gray that the driver cannot easily notice unless looking at the center of the vision. Alternatively, the light notifying the recognized risk object E may be made to blink frequently, and the light notifying the recognized risk object F may be made to be faint light that does not blink.

Further, information about one recognized risk object is notified by the display device 200 and information about two recognized risk objects is notified by the light-emitting device 300 here, but the number of recognized risk objects about which information is notified may be variable. For example, when the priority of the recognized risk object F is lower than a predetermined threshold, notification of information about the risk object F may not be performed, and information about one recognized risk object E may be notified by the light-emitting device 300.

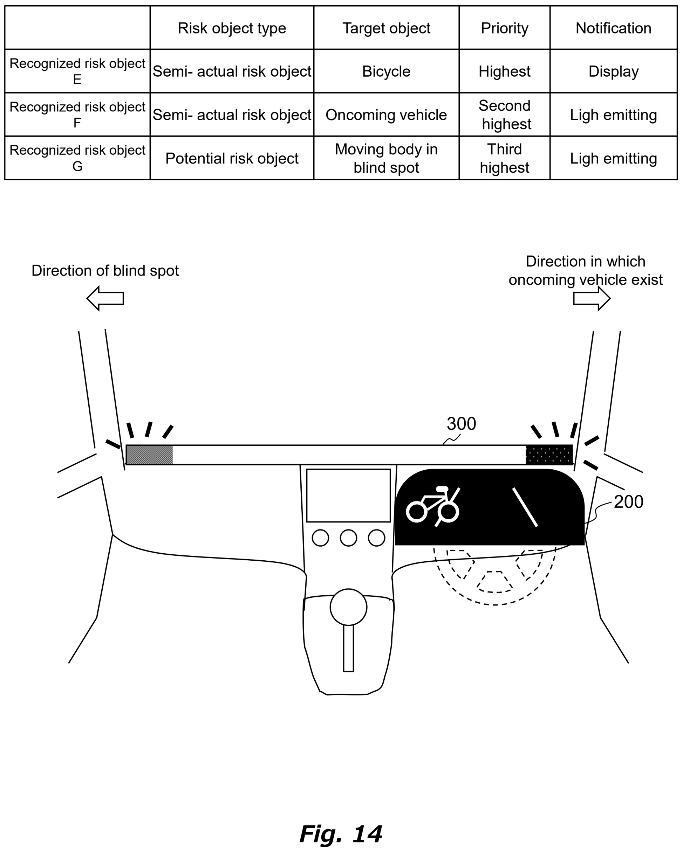

Fig. 14 shows a scene after the scene shown in Fig. 13 and a scene in which the pedestrian who is the recognized risk object D has left. As the recognized risk object D is eliminated, the recognized risk object E is moved up to become the recognized risk object with the highest priority. Therefore, the display device 200 notifies information about the recognized risk object E. The display screen of the display device 200 changes, and a bicycle icon representing the recognized risk object E is displayed.

Information about the recognized risk object F, which has become the recognized risk object with the second highest priority, continues to be notified from the light-emitting device 300 as it is. At this time, the color or pattern of the light emitted may be changed to indicate that the priority of the recognized risk object F has been raised, or notification may continue to be performed by the same color and the same pattern.

In addition, since the recognized risk object G is moved up to become the recognized risk object with the third highest priority, information about the recognized risk object G is newly notified by the light-emitting device 300. However, for example, when the priority of the recognized risk object G is equal to or lower than the threshold value, information about the recognized risk object G does not need to be notified.

7. Modification

As a modification, the first notification device 200 may be a device which performs notification using a combination of different notification methods. For example, the first notification device 200 may be a device that combines a display device and a speaker. In this case, information about the recognized risk object can be displayed on the display screen and at the same time the driver's attention can be called by audio. Alternatively, the first notification device 200 may be a device that combines the display device and a vibration device, or a device that combines the display device with the speaker and the vibration device. In this way, by notifying information by auditory information or vibration in addition to visible information, attention can be more effectively drawn to the risk object with the highest priority.

8. Third Notification Device

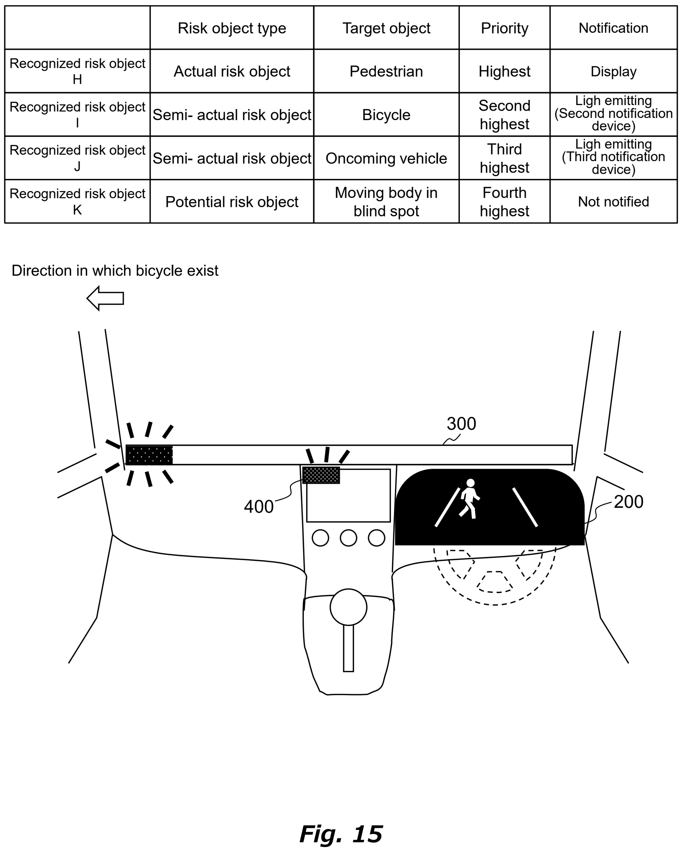

Fig. 15 is a diagram showing a scene of notification in an embodiment in which the support apparatus 10 includes a third notification device 400 in addition to the first notification device 200 and the second notification device 300. The third notification device 400 is configured as a device having hardware different from either the first notification device 200 or the second notification device 300. The third notification device 400 is a device which notifies the driver by an arbitrary notification method. For example, the third notification device 400 may be a display device, a light-emitting device, a speaker, or a device which notifies information by vibration. Furthermore, the third notification device 400 may be a device which used the same notification method as at least one of the first notification device 200 and the second notification device 300, or may be a device that uses a notification method different from either of them.

However, a particularly preferred embodiment is that the first notification device 200, the second notification device 300, and the third notification device 400 are all configured as devices that perform notification visually. In devices which provide visual notification, the amount of information conveyed by each device differs significantly depending on the type of the device, or even if these are the same type of devices, each device can provide different amount of information, so it is possible to make it easier for the driver to understand the priority of notification. Fig. 15 shows an example in which the first notification device 200, the second notification device 300, and the third notification device 400 are the display device, the light-emitting device, and the light-emitting device, respectively. The second notification device 300 and the third notification device 400 use the same notification method, but are different devices. For example, the third notification device 400 is a device which notifies information by lighting or blinking a partial area in a display panel of a navigation device.

The support apparatus 10 notifies information about three of the recognized risk objects separately to the first notification device 200, the second notification device 300, and the third notification device 400. Specifically, the support apparatus 10 notifies information about a recognized risk object H, which has the highest priority, by the first notification device 200, notifies information about a recognized risk object I, which has the second highest priority, by the second notification device 300, and notifies information about a recognized risk object J, which has the third highest priority, by the third notification device 400. Notification is not performed for a recognized risk object K, which has the fourth highest priority.

Information regarding the recognized risk object K that has not been notified by any of the first notification device 200, the second notification device 300, and the third notification device 400 may not be notified, or may be notified by the fourth notification device different from any of the first notification device 200, the second notification device 300, and the third notification device 400.

Even in the case where the support apparatus 10 includes the third notification device, it is possible to provide the driver with appropriate notification while preventing the driver from being provided with too much or too little information. In other words, since the first notification device does not notify the driver of information regarding all of the plurality of recognized risk objects, it is possible to prevent the driver from being overwhelmed with excessive information. Furthermore, at least a part of the information not notified by the first notification device is notified by the second notification device and the third notification device. Therefore, the driver can be informed that there is other recognized risk object in addition to the recognized risk object notified by the first notification device, and can be urged to pay sufficient attention.

As described above, according to the present invention, when a plurality of risk objects is recognized around the vehicle, information about a part or all of the plurality of risk objects is notified separately to at least two devices. This prevents the driver from being overwhelmed with excessive information or, conversely, from being given too little information, and allows the driver to be notified appropriately.

[Explanation of symbols]

1 Vehicle
10 Support apparatus
20 Recognition sensor
30 Vehicle state sensor
40 Actuator
100 Processing unit
101 Processor
102 Storage device
111 Recognition unit
112 Notification control unit
113 Priority calculation unit
200 First notification device
300 Second notification device
400 Third notification device

## Claims

1. A support apparatus that provides support to a driver of a vehicle when a risk object including a risk of collision with the vehicle is present, comprising:

    a first notification device configured as a device for notifying the driver of information;
    a second notification device configured as a device for notifying the driver of information and configured as a device different from the first notification device; and
    one or more processors,
    wherein the one or more processors are configured to execute:

    a recognition process for recognizing the risk object present around the vehicle; and
    a notification process for notifying the driver of information about a recognized risk object, the recognized object being the risk object that is recognized by the recognition process,
    and wherein the notification process includes, when there is a plurality of recognized risk objects, notifying information about a part or all of the plurality of recognized risk objects separately to the first notification device and the second notification device.

2. The support apparatus according to claim 1, wherein
    the second notification device is configured as a device that notifies information by a notification method different from that of the first notification device.

3. The support apparatus according to claim 1 or 2, wherein
    the first notification device and the second notification device are configured as devices that visually notify information.

4. The support apparatus according to claim 3, wherein

    the first notification device is a display device that notifies information by displaying information on a screen, and
    the second notification device is a light-emitting device that notifies information by emitting light.

5. The support apparatus according to claim 1, wherein

the support apparatus further comprises a third notification device configured as a device for notifying the driver of information and configured as a device different from the first notification device and the second notification device, and

the notification process includes, when there are three or more recognized risk objects, notifying information about a part or all of the recognized risk objects separately to the first notification device, the second notification device, and the third notification device.

6. The support apparatus according to claim 4, wherein

the one or more processors further execute
a priority calculation process for, when there is a plurality of recognized risk objects, calculating priority of notification of information to the driver for each of the plurality of recognized risk objects, and
the notification process includes, when there is the plurality of recognized risk objects, determining a device that notifies information about a part or all of the plurality of recognized risk objects based on the priority calculated by the priority calculation process.

7. The support apparatus according to claim 6, wherein
the notification process includes, when there is the plurality of recognition risk objects, notifying a part or all of the plurality of recognition risk objects separately to the first notification device and the second notification device so that information about the recognition risk object having highest priority among the plurality of recognition risk objects is notified by the first notification device.

8. The support apparatus according to claim 6, wherein
the priority calculation process includes calculating the priority based on a risk object type representing a type of the recognized risk object.

9. The support apparatus according to claim 8, wherein
the risk object type includes an actual risk object that is detected to exist around the vehicle and a potential risk object that is estimated to possibly exist around the vehicle.

10. The support apparatus according to claim 9, wherein
the risk object type further includes a semi-actual risk object that exists around the vehicle and is not a risk at present time but may become a risk in future.

11. The support apparatus according to claim 9, wherein
the priority calculation process includes calculating the priority of the actual risk object based on a movement probability representing a probability that the actual risk object moves toward the vehicle.

12. The support apparatus according to claim 4, wherein
the notification process includes, when there is only one recognized risk object, notifying information about the recognized risk object using the first notification device.

13. The support apparatus according to claim 3, wherein
the first notification device is placed at a location where an angle of a direction in which the driver looks at the first notification device and a traveling direction of the vehicle is smaller than an angle of a direction in which the driver looks at the second notification device and the traveling direction of the vehicle.

14. A support method for providing support to a driver of a vehicle when a risk object including a risk of collision with the vehicle is present, comprising:

recognizing the risk object present around the vehicle; and
notifying information about a part or all of a plurality of recognized risk objects separately to a first notification device that is a device for notifying the driver of information and a second notification device that is a device for notifying the driver of information and is different from the first notification device when there is the plurality of recognized risk objects.

15. A driver support program that causes a computer to execute a process for providing support to a driver of a vehicle when a risk object including a risk of collision with the vehicle is present, the driver support program configured to cause the computer to execute:

a process for recognizing the risk object present around the vehicle; and
a process for notifying information about a part or all of a plurality of recognized risk objects separately to a first notification device that is a device for notifying the driver of information and a second notification device that is a device for notifying the driver of information and is different from the first notification device when there is the plurality of recognized risk objects.

*Fig. 1*

**Fig. 2**

**Fig. 3**

**Fig. 4**

Fig. 5

**Fig. 6**

Pedestrian

Probability of
changing direction
Pped_turn

1

Movement probability of pedestrian Pped_turn
> Movement probability of bicycle Pbicycle_turn

Bicycle

Probability of
changing direction
Pbicycle_turn

1

Fig. 7

Pedestrian

Obstacle

Probability of
changing direction
Pturn_obstacle

1

Movement probability of pedestrian with obstacle
Pturn_obstacle > Movement probability of pedestrian
without obstacle Pturn_nothing

Pedestrian

Probability of
changing direction
Pturn_nothing

1

*Fig. 8*

| Risk object type | Target object | Priority | Notification |
|---|---|---|---|
| Actual risk object | Stopped vehicle | Highest | Display |
| Actual risk object | Pedestrian | Second highest | Light emitting |

**Fig. 9**

START

S110 — Recognize risk object?

NO

YES

S120 — Number of recognized risk object is plural?

NO

YES

S130 — Calculate priority

S140 —

S141 —

Notify information about recognized risk object
with highest priority
by first notification device

S142 —

Notify information about recognized risk object
with second highest priority
by second notification device

S150 —

Notify information about recognized risk object
by first notification device

END

*Fig. 10*

|  | Risk object type | Target object | Notification |
|---|---|---|---|
| Recognized risk object A | Potential risk object | Moving body in blind spot in intersection | Display |

*Fig. 11*

|  | Risk object type | Target object | Priority | Notification |
|---|---|---|---|---|
| Recognized risk object B | Semi-actual risk object | Oncoming vehicle | Highest | Display |
| Recognized risk object C | Potential risk object | Moving body in blind spot in intersection | Second highest | Light emitting |

Direction of blind spot in intersection

300

200

Fig. 12

| | Risk object type | Target object | Priority | Notification |
|---|---|---|---|---|
| Recognized risk object D | Actual risk object | Pedestrian | Highest | Display |
| Recognized risk object E | Semi-actual risk object | Bicycle | Second highest | Ligh emitting |
| Recognized risk object F | Semi-actual risk object | Oncoming vehicle | Third highest | Ligh emitting |
| Recognized risk object G | Potential risk object | Moving body in blind spot | Fourth highest | Not notified |

Direction in which bicycle exist

Direction in which oncoming vehicle exist

*Fig. 13*

|  | Risk object type | Target object | Priority | Notification |
|---|---|---|---|---|
| Recognized risk object E | Semi- actual risk object | Bicycle | Highest | Display |
| Recognized risk object F | Semi- actual risk object | Oncoming vehicle | Second highest | Ligh emitting |
| Recognized risk object G | Potential risk object | Moving body in blind spot | Third highest | Ligh emitting |

Direction of blind spot

Direction in which oncoming vehicle exist

300

200

*Fig. 14*

| | Risk object type | Target object | Priority | Notification |
|---|---|---|---|---|
| Recognized risk object H | Actual risk object | Pedestrian | Highest | Display |
| Recognized risk object I | Semi- actual risk object | Bicycle | Second highest | Ligh emitting (Second notification device) |
| Recognized risk object J | Semi- actual risk object | Oncoming vehicle | Third highest | Ligh emitting (Third notification device) |
| Recognized risk object K | Potential risk object | Moving body in blind spot | Fourth highest | Not notified |

Direction in which bicycle exist

*Fig. 15*

# EP 4 651 116 A1

## INTERNATIONAL SEARCH REPORT

| | International application No. |
|---|---|
| | **PCT/JP2023/041339** |

| A. | CLASSIFICATION OF SUBJECT MATTER |
|---|---|

*G08G 1/16*(2006.01)i
FI: G08G1/16 C

According to International Patent Classification (IPC) or to both national classification and IPC

| B. | FIELDS SEARCHED |
|---|---|

Minimum documentation searched (classification system followed by classification symbols)

G08G1/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-181255 A (YAZAKI CORPORATION) 25 November 2021 (2021-11-25) paragraphs [0035], [0039], [0053], [0122]-[0129], [0146]-[0147] | 1-6, 8-15 |
| A | paragraphs [0035], [0039], [0053], [0122]-[0129], [0146]-[0147] | 7 |
| A | WO 2018/163266 A1 (MITSUBISHI ELECTRIC CORPORATION) 13 September 2018 (2018-09-13) paragraph [0064], fig. 13 | 7 |
| A | JP 2016-197407 A (DENSO CORPORATION) 24 November 2016 (2016-11-24) paragraphs [0062]-[0063] | 1-15 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 January 2024** | **06 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

31

INTERNATIONAL SEARCH REPORT
Information on patent family members

International application No.

**PCT/JP2023/041339**

| Patent document cited in search report | | | Publication date (day/month/year) | Patent family member(s) | Publication date (day/month/year) |
|---|---|---|---|---|---|
| JP | 2021-181255 | A | 25 November 2021 | (Family: none) | |
| WO | 2018/163266 | A1 | 13 September 2018 | (Family: none) | |
| JP | 2016-197407 | A | 24 November 2016 | US 2018/086346 A1 paragraphs [0098]-[0099] CN 107428299 A | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020013369 A

- US 9272708 B